# EUROPÄISCHE PATENTANMELDUNG

(11) **EP 2 944 895 A1**
(43) Veröffentlichungstag der Anmeldung: **18.11.2015**
(21) Anmeldenummer: 14168093.4
(22) Anmeldetag: 13.05.2014
(51) Int. Cl.: F24J 2/26, F24J 2/48, F24J 2/24, F24J 2/46

(54) **Verfahren zur Herstellung eines Absorberbauteils für thermosolare Anwendungen und ein solches Absorberbauteil**

(71) Anmelder: ThyssenKrupp Steel Europe AG, 47166 Duisburg (DE); ThyssenKrupp AG, 45143 Essen (DE)
(72) Erfinder: GLASS, Roman, 44135 Dortmund (DE); HOLSCHUMACHER, Dirk, 51427 Bergisch Gladbach (DE); WERNER, Bettina, 58239 Schwerte (DE)
(74) Vertreter: Cohausz & Florack

(57) **Zusammenfassung**

Die Erfindung betrifft ein Verfahren eines Absorberbauteils für thermosolare Anwendungen, gekennzeichnet durch die Arbeitsschritte: Bereitstellen eines metallischen Flachproduktes (1), vorzugsweise Flachstahlproduktes; Aufbringen einer Absorptionsschicht (2) auf die Oberseite des Flachproduktes, wobei die aufgebrachte Absorptionsschicht (2) zumindest partiell im Wellenlängenbereich kleiner/gleich 3000 nm einen solaren Absorptionskoeffizienten im Bereich von 0,3 bis 0,8 aufweist; Aufbringen eines Haftvermittlers (8') auf die Unterseite des Flachproduktes (1); Aufbringen einer Klebschicht (7) auf den Haftvermittler (8') oder einer den Haftvermittler (8') enthaltenden Klebschicht (7) auf die Unterseite des Flachproduktes (1); und Aufbringen mindestens eines Leitungselements (5) auf die Klebschicht (7), wobei das Leitungselement (5) dazu vorgesehen ist, von einem Wärmeträgerfluid durchströmt zu werden. Ferner wird ein solches Absorberbauteil beansprucht.

## Beschreibung

Die Erfindung betrifft ein Verfahren zur Herstellung eines Absorberbauteils für thermosolare Anwendungen und ein solches Absorberbauteil.

Im Stand der Technik sind verschiedenste Fassadenpaneele basierend auf metallischen Flachprodukten bekannt. Aus Gründen der begrenzten Ressourcen an fossilen Energieträgern sowie des insbesondere durch CO₂-Emissionen verursachten Klimawandels steigt der Bedarf an Fassadenpaneelen mit integrierter Solarkollektorfunktion. Solche Fassadenelemente ermöglichen eine vermehrte Nutzung von solarthermischer Energie insbesondere in Verbindung mit Wärmepumpen.

Derartige Paneele für thermosolare Anwendungen sind beispielsweise aus der DE 10 2008 011 219 A1 bekannt. Diese Paneele (Absorberbauteile) bestehen im Wesentlichen aus zwei flächigen Deckelementen und einer dazwischen liegenden Isolationsschicht, wobei eines der Deckelemente auf seiner der Sonnenstrahlung zugewandten Außenseite mit einer Absorptionsschicht und auf seiner Innenseite mit einem Leitungssystem für ein Wärmeträgerfluid versehen ist.

Der vorliegenden Erfindung lag die Aufgabe zugrunde, ein Verfahren anzugeben, durch das sich Absorberbauteile für thermosolare Anwendungen einfach und kostengünstig herstellen lassen. Ferner soll ein entsprechendes Absorberbauteil zur Verfügung gestellt werden.

Diese Aufgabe wird erfindungsgemäß durch ein Verfahren mit den Merkmalen des Anspruchs 1 gelöst. Vorteilhafte Ausgestaltungen des erfindungsgemäßen Verfahrens sind in den auf Anspruch 1 rückbezogenen Ansprüchen angegeben. Hinsichtlich des Absorberbauteils wird die Aufgabe durch das in Anspruch 15 definierte Absorberbauteil gelöst.

Das erfindungsgemäße Verfahren ist durch folgende Arbeitsschritte gekennzeichnet: Bereitstellen eines metallischen Flachproduktes, vorzugsweise Flachstahlproduktes; Aufbringen einer Absorptionsschicht auf die Oberseite des Flachproduktes, wobei die aufgebrachte Absorptionsschicht zumindest partiell im Wellenlängenbereich kleiner/gleich 3000 nm einen solaren Absorptionskoeffizienten im Bereich von 0,3 bis 0,8 aufweist; Aufbringen eines Haftvermittlers auf die Unterseite des Flachproduktes; Aufbringen einer Klebschicht auf den Haftvermittler oder einer den Haftvermittler enthaltenden Klebschicht auf die Unterseite des Flachproduktes; und Aufbringen mindestens eines Leitungselements auf die Klebschicht, wobei das Leitungselement dazu vorgesehen ist, von einem Wärmeträgerfluid durchströmt zu werden.

Üblicherweise wird bei Absorberbauteilen für thermosolare Anwendungen ein möglichst hoher Absorptionsgrad im Bereich von 0,9 bis 1 angestrebt. Es hat sich jedoch gezeigt, dass bei erfindungsgemäßen Bauteilen aufgrund der relativ großen Absorberflächen in der Regel im Wellenlängenbereich bis 3000 nm ein Absorptionsgrad in der Größenordnung von 0,3 bis 0,8 ausreichend ist. Des Weiteren ist bei Verwendung von Wärmepumpen ein relativ schmales Temperaturfenster zu beachten. Denn bei einer Wärmepumpe wird unter Aufwendung von technischer Arbeit thermische Energie aus einem Reservoir mit niedriger Temperatur (üblicherweise ist das die Umgebung) aufgenommen und - unter zusammen mit der Antriebsenergie - als Nutzwärme auf ein zu beheizendes System mit höherer Temperatur, z.B. eine Raumheizung, übertragen. Für einen effektiven und zuverlässigen Betrieb einer Wärmepumpe genügt somit bereits ein relativ geringer Temperaturunterschied zwischen dem Reservoir mit niedriger Temperatur und dem zu beheizenden System mit höherer Temperatur. Ein zu hoher Absorptionsgrad kann dagegen dazu führen, dass das Wärmeträgerfluid über den zweckmäßigen Temperaturbereich der Wärmepumpe erhitzt wird.

Die Erfindung sieht daher vor, den Absorptionsgrad erfindungsgemäßer Absorberbauteile zu verringern, so dass diese sich insbesondere vorteilhaft mit einer oder mehreren Wärmepumpen kombinieren lassen. Die auf die Oberseite des Flachproduktes, z.B. Flachstahlproduktes aufgebrachte Absorptionsschicht weist vorzugsweise zumindest partiell im Wellenlängenbereich kleiner/gleich 3000 nm einen solaren Absorptionskoeffizienten (Absorptionsgrad α) im Bereich von 0,3 bis 0,6, besonders bevorzugt zwischen 0,3 und 0,5 auf.

Ein vorteilhafter Nebeneffekt der Verringerung des Absorptionsgrades auf einen Wert kleiner 0,8, vorzugsweise kleiner 0,6, insbesondere kleiner 0,5 besteht darin, dass hierdurch eine größere Auswahl von Farben für die Absorptionsschicht zur Verfügung steht, was entsprechende gestalterische Freiheiten bei der Farbgestaltung erfindungsgemäßer Absorberbauteile bietet.

Die Klebschicht ermöglicht ein schnelle und zuverlässige Fixierung eines oder mehrerer Leitungselemente, vorzugsweise Rohre, auf dem metallischen Flachprodukt. Als Klebschicht wird vorzugsweise eine doppelseitige Klebefolie verwendet. Die Klebschicht bzw. Klebefolie kann während der Durchführung des erfindungsgemäßen Verfahrens zunächst mit einer Schutzfolie abgedeckt werden. Bei Verwendung einer Klebefolie ist diese vorzugsweise bereits vor dem Aufbringen auf das metallische Flachprodukt mit einer abziehbaren Schutzfolie versehen. In jedem Fall kann hierdurch das Aufbringen der Leitungselemente auf die Klebschicht zeitlich unabhängig vom Aufbringen der Klebschicht durchgeführt werden. Die beiden Arbeitsschritte lassen sich auf diese Weise vorteilhaft zeitlich entkoppeln. Insbesondere kann in diesem Fall zunächst eine große Anzahl von metallischen Flachprodukten mit der Klebschicht und der abziehbaren Schutzfolie versehen, gegebenenfalls zwischengelagert und am gleichen oder an einem anderen Ort weiterbearbeitet werden, indem dann die Schutzfolie abgezogen und das mindestens eine Leitungselement auf die Klebschicht aufgebracht wird. Hierauf oder hiermit gekoppelt können dann weitere Arbeitsschritte, beispielsweise das Aufbringen einer Wärmedämmschicht und das Aufbringen einer Basisschicht als rückseitige Trägerschicht erfolgen.

Der Haftvermittler ist speziell auf die Klebschicht sowie das metallische Flachprodukt abgestimmt. Der Haftvermittler kann als Haftvermittlerschicht vor dem Aufbringen der Klebschicht, vorzugsweise Klebefolie, aufgebracht werden. Alternativ kann der Haftvermittler auch in der Klebschicht bzw. Klebefolie enthalten sein. Der Haftvermittler bzw. die Haftvermittlerschicht erhöht die Bindung zwischen der Klebschicht und dem metallischen Flachprodukt. Hierzu enthält der Haftvermittler bzw. die Haftvermittlerschicht beispielsweise nucleophile Gruppen oder Zentren. Bei diesen nucleophilen Gruppen oder Zentren handelt es sich insbesondere um folgende Gruppen bzw. Moleküle: -OH, -NH₂, -SH, -CHO (Aldehyde), -COOH (Carbonsäuren), -CN, -NC, -SCN, -NCS, -SO₄, -SO₃, -NO, -NO₂, -NO₃, =CO (Ketone), Halogenide (-F, -Cl, -Br, -I) und -PH₂ (Phosphine). Zudem schützt die Haftvermittlerschicht das metallische Flachprodukt im Falle einer Beschädigung der Klebschicht. Insbesondere hemmt die Haftvermittlerschicht eine Korrosionsunterwanderung.

In einer bevorzugten Ausführungsform enthält auch die Klebschicht bzw. Klebefolie nuclephile Gruppen. Dies hat den Vorteil, dass bei einer Beschäumung mit PUR- oder PIR-Schäumen der Schaum direkt mit der Klebschicht bzw. Klebefolie reagiert und eine sehr feste und dauerhafte Verbindung eingeht. Dies hat den Vorteil, dass bei der Herstellung von ausgeschäumten Sandwichprodukten Lufteinschlüsse (sogenannte Lunker; Qualitätsproblem bei der Herstellung von Sandwichprodukten) nahe der Stahloberfläche oder an der Stahloberfläche nicht zur Delamination führen. Wird das Sandwichprodukt der Sonne ausgesetzt, dehnt sich die eingeschlossene Luft aus und führt zu einer sukzessiven Delamination des Stahlflachprodukts an der Grenzfläche zum Schaum. Durch die Verwendung einer Klebschicht bzw. Klebefolie mit ebenfalls tragenden nucleophilen Gruppen wird eine sehr starke Haftung zum Schaum während des Ausschäumens durch direkte Reaktion der Isocyanate (Schaumbestandteil) mit der Klebschicht bzw. Klebefolie erreicht, so dass eine durch Lufteinschlüsse verursachte Delamination verhindert wird.

Als metallisches Flachprodukt wird vorzugsweise ein Flachstahlprodukt verwendet. Stahl hat gegenüber den üblicherweise für die Trägerschicht des Leitungssystems verwendeten Materialien den Vorteil, dass er günstig herstellbar ist und auch bei geringen Blechdicken ein so hohe Festigkeit besitzt, dass erfindungsgemäße Absorberbauteile ohne die Gefahr von Deformierungen bzw. Beschädigungen auch als Konstruktionselemente, insbesondere als Dachhaut- und Fassadenpaneele genutzt werden können. Bei dem bei der Durchführung des erfindungsgemäßen Verfahrens verwendeten Stahlflachprodukt kann es sich insbesondere um ein Flachprodukt aus nicht rostendem Stahl handeln. Des Weiteren kann es sich um ein Flachstahlprodukt handeln, das beidseitig mit einem metallischen Korrosionsschutzüberzug auf Zink-, Zinn- oder Aluminiumbasis beschichtet ist. Das Flachstahlprodukt weist beispielsweise eine Dicke im Bereich von 0,3 bis 5,0 mm, vorzugsweise 0,5 bis 1,5 mm auf.

Die erfindungsgemäß auf das metallische Flachprodukt bzw. die Haftvermittlerschicht aufgebrachte Klebschicht oder Klebefolie ist so beschaffen, dass das Leitungselement unmittelbar nach dem Aufbringen der Klebschicht oder Klebefolie mit derselben durch Aneinanderfügen und gegebenenfalls Anpressen stoffschlüssig verbindbar ist. Ein Abwarten einer Aushärt- oder Aktivierungszeit ist nicht erforderlich. Vielmehr kann das Leitungselement sofort auf die aufgebrachte Klebschicht oder Klebefolie aufgelegt oder angefügt werden; lediglich die gegebenenfalls vorhandene optionale Schutzfolie muss vor dem Aufbringen des Leitungselements abgezogen werden.

Eine vorteilhafte Ausgestaltung des erfindungsgemäßen Verfahrens ist dadurch gekennzeichnet, dass die aufgebrachte Absorptionsschicht zumindest partiell im Wellenlängenbereich größer 3000 nm einen solaren Emissionsgrad ε im Bereich von 0,3 bis 1,0 aufweist.

Üblicherweise wird bei Absorberbauteilen für thermosolare Anwendungen ein möglichst geringer Emissionsgrad ε zwischen 0 und 0,2 angestrebt, um die Verlustleistung durch Wärmestrahlung möglichst gering zu halten. Dies ist bei erfindungsgemäßen Anwendungen allerdings nicht zwingend notwendig. Es hat sich gezeigt, dass bei erfindungsgemäßen Bauteilen aufgrund der relativ großen Absorberflächen in der Regel im Wellenlängenbereich über 3000 nm ein Emissionsgrad ε in der Größenordnung von 0,3 bis 1,0 ausreichend ist. Beispielsweise kann der Emissionsgrad ε der aufgebrachten Absorptionsschicht zumindest partiell im Wellenlängenbereich größer 3000 nm im Bereich von 0,4 bis 1,0, insbesondere zwischen 0,5 und 1,0 liegen.

Versuche seitens der Anmelderin haben ergeben, dass es für viele thermosolaren Anwendungen des erfindungsgemäßen Absorberbauteils, insbesondere in Kombination mit einer Wärmepumpe, ausreichend bzw. günstig ist, wenn die auf das Flachprodukt aufgebrachte Absorptionsschicht nur geringfügig selektiv, also eher unselektiv ausgebildet ist. Dies bedeutet, dass sich der Absorptionsgrad α der aufgebrachten Absorptionsschicht im Wellenlängenbereich bis 3000 nm von dem Emissionsgrad ε der aufgebrachten Absorptionsschicht im Wellenlängenbereich größer 3000 nm beispielsweise nur um einen Betrag von maximal 0,2 unterscheidet. Beträgt der Absorptionsgrad α beispielsweise ca. 0,6, so liegt in diesem Fall der Emissionsgrad ε zwischen 0,4 und 0,8, insbesondere im Bereich von 0,5 bis 0,7.

Nach einer alternativen Ausgestaltung des erfindungsgemäßen Verfahrens kann die Absorptionsschicht aber auch so ausgebildet werden, dass sich ihr Absorptionsgrad α im Wellenlängenbereich bis 3000 nm von dem Emissionsgrad ε im Wellenlängenbereich größer 3000 nm (z.B. 3001 bis 20000 nm) um einen Betrag von mehr als 0,2 unterscheidet (α = ε + x, wobei x > 0,2). Beträgt der Absorptionsgrad α der Absorptionsschicht beispielsweise ca. 0,5, so liegt in diesem Fall der Emissionsgrad ε oberhalb von 0,7, beispielsweise bei 0,8 oder 0,9. In diesem Fall kann auch von einer invers-selektiven Eigenschaft der Absorptionsschicht gesprochen werden.

Die Absorptionsschicht ist vorzugsweise aus einem Lack oder einer Folie gebildet. Vor dem Aufbringen des Lacks bzw. der Folie wird das als Trägerschicht dienende metallische Flachprodukt, vorzugsweise Flachstahlprodukt, gereinigt. Die Reinigung erfolgt vorzugsweise unter Verwendung eines alkalischen Reinigungsmittels. Nach der Reinigung erfolgt eine Vorbehandlung der Trägerschicht beispielsweise mit Titan oder einem Titan-Kobalt-Gemisch. Nach der Vorbehandlung wird die Trägerschicht auf ihrer später der Sonne zugewandten Außenseite mit einem Primer beschichtet. Die Schichtdicke des aufgetragenen Primers liegt beispielsweise im Bereich von 3 bis 30 µm. Auf den Primer folgt dann ein solarselektiver Decklack, dessen Dicke beispielsweise im Bereich von 20 bis 200 µm liegt. Alternativ zu einem solchen Lackaufbau kann in dem erfindungsgemäßen Verfahren auch ein Folienaufbau gewählt werden, wobei beispielsweise eine Lack-, Plastisol-, PVC- oder organische Photovoltaik-Folie als Absorptionsschicht auf die Trägerschicht aufgebracht wird.

Das Aufbringen des Lacks bzw. der Folie auf die bandförmige Trägerschicht erfolgt vorzugsweise in einem kontinuierlichen Beschichtungsprozess. Die Reinigung bzw. alkalische Entfettung der Trägerschicht erfolgt dabei beidseitig. Die Vorbehandlung mit Titan oder einem Titan-Kobalt-Gemisch und der anschließende Auftrag des Primers sowie des Decklackes bzw. der Folie erfolgen dagegen jeweils einseitig, und zwar auf der später der Sonne zugewandten Außenseite der Trägerschicht.

Auf die gereinigte, insbesondere alkalisch entfettete Rückseite der Trägerschicht wird vorzugsweise zeitparallel zu dem Auftrag der Absorptionsschicht die doppelseitige Klebschicht aufgebracht.

Die bandförmige, mit dem solarselektiven Lack bzw. einer entsprechenden Folie sowie der Klebschicht beschichtete Trägerschicht kann direkt weiterverarbeitet oder zu einem Coil aufgewickelt und zwischengelagert werden. Die Klebschicht auf der Rückseite der bandförmigen Trägerschicht ist durch das Aufwickeln zu dem Coil geschützt.

Nach einer weiteren vorteilhaften Ausgestaltung des erfindungsgemäßen Verfahrens weisen die Haftvermittlerschicht und/oder die Klebschicht im ausgehärteten, insbesondere vernetzten Zustand flexible und/oder plastische Eigenschaften auf. Die Haftvermittlerschicht und/oder die Klebschicht sind somit imstande, unterschiedliche Ausdehnungen von metallischem Flachprodukt und Leitungselement auszugleichen. Die Schichtdicke der Klebschicht sollte mindestens 10 µm betragen. Vorzugsweise wird die Klebschicht mit einer Schichtdicke von mindestens 100 µm auf die Haftvermittlerschicht aufgetragen. Vorteilhaft kann die Schichtdicke der Klebschicht auch größer als die Wanddicke des Leitungselements sein. Beispielsweise beträgt die Schichtdicke der Klebschicht dann mindestens das 1,5-fache, vorzugsweise mindestens das 2-fache der Wanddicke des Leitungselements.

Die Klebschicht ermöglicht das stoffschlüssige Anbinden von Leitungselementen aus verschiedenen Materialien. Das mindestens eine mit dem metallischen Flachprodukt zu verbindende Leitungselement kann beispielsweise aus Kunststoff, insbesondere aus Polyethylen (PE), Polyethylenterephthalat (PET), Polypropylen (PP) oder Ethylen-Propylen-Dien-Kautschuk (EPDM), oder aus Metall, insbesondere aus Aluminium, Kupfer oder Stahl, insbesondere Edelstahl gefertigt sein.

Typischerweise umfasst das Leitungssystem rohr- oder schlauchförmige Leitungselemente, die in einer harfen-, mäanderförmigen oder bionischen Anordnung verteilt angeordnet werden. Der Vorteil der Verwendung von rohrförmigen Leitungselementen, insbesondere solchen mit im Wesentlichen kreisrunden Hohlprofilquerschnitt besteht dabei darin, dass diese auch hohen Flüssigkeitsdrücken problemlos standhalten. In einer bevorzugten Ausgestaltung des erfindungsgemäßen Verfahrens werden als Leitungselemente solche mit rechteckigem Profilquerschnitt verwendet. Alternativ können auch Leitungselemente verwendet werden, die mindestens einen abgeflachten oder flachen Profilabschnitt aufweisen, beispielsweise Leitungselemente mit ovalem Profilquerschnitt. Durch den flachen Profilabschnitt kann gegenüber einem kreisrunden Profilquerschnitt eine vergrößerte Anbindungsfläche zwischen Leitungselement und metallischem Flachprodukt geschaffen werden.

Die Klebschicht wird beispielsweise vollflächig auf die Unterseite des metallischen Flachprodukts bzw. die Haftvermittlerschicht aufgebracht. Nach einer alternativen Ausführungsform kann die Klebschicht aber auch derart ausgebildet werden, dass sie die Unterseite des Flachproduktes partiell bedeckt. Diese Ausführungsform lässt sich beispielsweise durch die Verwendung von doppelseitigen Klebebändern oder gelochten, doppelseitig klebenden Klebefolien verwirklichen. Durch die unterbrochene Klebschicht kann die Wärmeleitung von dem metallischen Flachprodukt zu dem mindestens einen Leitungselement verbessert werden, indem das Leitungselement in ein Material mit guter Wärmeleitfähigkeit eingebettet wird, das über die Unterbrechungen der Klebschicht das metallische Flachprodukt bzw. die Haftvermittlerschicht unmittelbar kontaktieren kann. Vorzugsweise wird die Haftvermittlerschicht ebenfalls als unterbrochene oder gelochte Schicht ausgebildet, wobei sich dann die Aussparungen (Löcher) der Haftvermittlerschicht mit denjenigen der Klebschicht decken.

Nach einer weiteren vorteilhaften Ausgestaltung des erfindungsgemäßen Verfahrens wird zur Herstellung der Klebschicht ein Klebstoff oder eine Klebefolie verwendet, der/die Partikel enthält, die bei einer Temperatur von 0°C eine Wärmeleitfähigkeit von mindestens 20 W/mK, vorzugsweise von mindestens 50 W/mK aufweisen. Hierdurch wird die Wärmeleitung von dem metallischen Flachprodukt zu dem mindestens einen Leitungselement verbessert.

Eine weitere vorteilhafte Ausgestaltung des erfindungsgemäßen Verfahrens ist dadurch gekennzeichnet, dass als Flachprodukt ein Flachstahlprodukt verwendet wird, das zumindest an seiner Oberseite eine dreidimensionale Struktur aufweist. Alternativ oder ergänzend kann auch die Absorptionsschicht derart ausgebildet werden, dass sie eine dreidimensionale Struktur aufweist. Durch die Strukturierung der Oberfläche des metallischen Flachprodukts, vorzugsweise Flachstahlprodukts, bzw. der Oberfläche der Absorptionsschicht lässt sich erreichen, dass mit der Unterseite des metallischen Flachproduktes stoffschlüssig verbundene Elemente, beispielsweise das mindestens eine Leitungselement oder Abstandshalter, die sich an der Sichtseite des fertigen Absorberbauteils mitunter abzeichnen können, optisch kaschiert werden. Durch die Oberflächenstrukturierung des metallischen Flachprodukts bzw. der Absorptionsschicht wird zudem die wirksame Absorptionsfläche vergrößert.

Die Oberflächenstruktur des metallischen Flachprodukts kann beispielsweise mittels strukturierter Prägewalzen, insbesondere Dressurwalzen, Prägewalzen und Druckwalzen erzeugt werden. Mittels Dressurwalzen kann die metallische Korrosionsschutzschicht des Flachproduktes texturiert werden. Mittels Prägewalzen kann in eine auf das metallische Flachprodukt aufgebrachte Lackschicht ein dreidimensionales Muster oder Relief eingeprägt werden. Unter Verwendung einer strukturierten Druckwalze kann ein Lack auf das metallische Flachprodukt aufgetragen werden, wobei der aufgetragene Lack gleichzeitig eine entsprechende Struktur aufweist bzw. eine Struktur generiert wird. Ebenso kann auch die auf das metallische Flachprodukt aufgebrachte Absorptionsschicht mittels einer oder mehrerer Prägewalzen texturiert werden. Die so hergestellte dreidimensionale Struktur kann stochastisch und/oder deterministisch verteilte Strukturelemente aufweisen. Eine gute optische Kaschierung von mit der Unterseite des metallischen Flachprodukts stoffschlüssig verbundenen Elementen lässt sich insbesondere mit einer stochastisch verteilte Strukturelemente aufweisenden Oberflächenstruktur erzielen.

Eine weitere Ausgestaltung des erfindungsgemäßen Verfahrens ist dadurch gekennzeichnet, dass die Absorptionsschicht derart ausgebildet wird, dass sie Flächenbereiche mit unterschiedlichem Absorptionskoeffizienten aufweist. Auf diese Weise lassen sich beispielsweise architektonisch vorgegebene Dekorfarben, die einen eher schlechten solaren Absorptionskoeffizienten besitzen, mit Dekorfarben und/oder Oberflächenstrukturen kombinieren, die sich durch einen höheren solaren Absorptionskoeffizienten auszeichnen.

Eine weitere Ausgestaltung des erfindungsgemäßen Verfahrens sieht vor, dass die Absorptionsschicht mit einer transparenten Decklackschicht oder transparenten Deckfolie beschichtet wird. Hierdurch kann die Absorptionsschicht vor mechanischen und/oder chemischen Einwirkungen, beispielsweise vor sauren Niederschlägen, salzhaltiger Umgebungsluft oder abrasiven Schwebeteilchen geschützt werden.

Hinsichtlich einer effizienten Herstellung von Absorberbauteilen für thermosolare Anwendungen ist es ebenfalls vorteilhaft, wenn gemäß einer weiteren Ausgestaltung des erfindungsgemäßen Verfahrens das mindestens eine Leitungselement vor dem Aufbringen auf die Klebschicht in einem mindestens eine Nut aufweisenden Wärmedämmkörper eingelegt wird, wobei das in die Nut eingelegte Leitungselement flächenbündig mit dem Wärmedämmkörper abschließt oder gegenüber dem Wärmedämmkörper (geringfügig) vorsteht. Auf diese Weise lässt sich ein rohr- oder schlauchförmiges Leitungselement beispielsweise in Form eines Mäanders vormontieren und sodann schnell und qualitativ hochwertig mit dem metallischen Flachprodukt stoffschlüssig verbinden.

Eine weitere Ausgestaltung des erfindungsgemäßen Verfahrens ist dadurch gekennzeichnet, dass das Leitungselement oder der Wärmedämmkörper rückseitig mit einer Basisschicht beschichtet wird, wobei die Verbindung mit der Basisschicht durch Hinterschäumen des mit Abstand zur Basisschicht angeordneten Leitungselements/Wärmedämmkörpers erzeugt wird. Durch die Basisschicht, die vorzugsweise ebenfalls aus einem metallischen Flachprodukt, insbesondere aus einem Stahlflachprodukt besteht, wird die Stabilität, insbesondere die Biegesteifigkeit des Absorberbauteils verbessert. Zugleich wird durch die Basisschicht der Wärmedämmkörper vor mechanischer Beschädigung geschützt. Des Weiteren kann die Basisschicht zur Abdichtung des Wärmedämmkörpers gegenüber dem Eindringen von Feuchtigkeit beitragen.

Eine weitere vorteilhafte Ausgestaltung des erfindungsgemäßen Verfahrens sieht vor, dass die Absorberbauteile aneinandergereiht in einem kontinuierlichen oder quasikontinuierlichen Prozess mit der Basisschicht beschichtet werden, wobei die Verbindung mit der Basisschicht durch Hinterschäumen erzeugt wird. Auf diese Weise lässt sich eine Großserie erfindungsgemäßer Absorberbauteile besonders wirtschaftlich herstellen.

Nach einer weiteren Ausgestaltung des erfindungsgemäßen Verfahrens werden während der Verbindung der Basisschicht mit dem Leitungselement/Wärmedämmkörper zueinander kompatible Formschlusselemente an gegenüberliegenden Kanten des Absorberbauteils ausgebildet. Die Formschlusselemente können beispielsweise in Form von Nut und Feder ausgebildet werden. Sie vereinfachen die Montage der gleichförmig ausgebildeten Absorberbauteile.

Das erfindungsgemäße Absorberbauteil basiert somit auf einem metallischen Flachprodukt, vorzugsweise Flachstahlprodukt mit einer Oberseite und einer Unterseite, wobei auf die Oberseite des Flachproduktes eine Absorptionsschicht aufgebracht ist, die zumindest partiell im Wellenlängenbereich kleiner/gleich 3000 nm einen solaren Absorptionskoeffizienten im Bereich von 0,3 bis 0,8 aufweist, wobei auf die Unterseite des Flachproduktes entweder ein Haftvermittler und darauf eine Klebschicht oder eine einen Haftvermittler enthaltende Klebschicht aufgebracht ist, und wobei auf die Klebschicht mindestens ein Leitungselement aufgebracht ist, welches dazu vorgesehen ist, von einem Wärmeträgerfluid durchströmt zu werden.

Die voranstehend in Bezug auf das erfindungsgemäße Verfahren genannten Vorteile gelten ebenso für das erfindungsgemäße Absorberbauteil.

Vorzugsweise weist die auf die Oberseite des Flachproduktes aufgebrachte Absorptionsschicht zumindest partiell im Wellenlängenbereich größer 3000 nm einen solaren Emissionsgrad im Bereich von 0,3 bis 1,0 auf.

Die Klebschicht ist vorzugsweise aus einer Klebefolie gebildet oder als solche ausgeführt. Des Weiteren kann die Klebschicht derart ausgebildet sein, dass sie die Unterseite des Flachproduktes partiell bedeckt.

Eine weitere Ausgestaltung des erfindungsgemäßen Absorberbauteils ist dadurch gekennzeichnet, dass die Klebschicht aus einem Klebstoff oder einer Klebefolie hergestellt ist, der/die Partikel enthält, die bei einer Temperatur von 0°C eine Wärmeleitfähigkeit von mindestens 20 W/mK, vorzugsweise von mindestens 50 W/mK aufweisen.

Nach einer besonders bevorzugten Ausgestaltung der Erfindung enthält der Haftvermittler und/oder die Klebschicht nucleophile Gruppen oder Zentren.

Bei dem in dem erfindungsgemäßen Absorberbauteil verwendeten Flachprodukt handelt es sich vorzugsweise um ein Stahlflachprodukt, das zumindest an seiner Oberseite eine dreidimensionale Struktur aufweist, wobei die dreidimensionale Struktur stochastisch und/oder deterministisch verteilte Strukturelemente aufweist.

Die Absorptionsschicht ist vorzugsweise derart ausgebildet, dass sie eine dreidimensionale Struktur und/oder Flächenbereiche mit unterschiedlichem Absorptionskoeffizienten aufweist.

Auch kann die Absorptionsschicht mit einer transparenten Decklackschicht oder transparenten Deckfolie beschichtet sein.

Eine weitere Ausgestaltung des erfindungsgemäßen Absorberbauteils ist dadurch gekennzeichnet, dass das mindestens eine Leitungselement in einem mindestens eine Nut aufweisenden Wärmedämmkörper eingelegt ist, wobei das in die Nut eingelegte Leitungselement flächenbündig mit dem Wärmedämmkörper abschließt oder gegenüber dem Wärmedämmkörper vorsteht.

Nach einer weiteren Ausgestaltung des erfindungsgemäßen Absorberbauteils weist dieser kompatible Formschlusselemente auf. Die Formschlusselemente sind dabei an gegenüberliegenden Kanten des Absorberbauteils ausgebildet.

Nachfolgend wird die Erfindung anhand einer mehrere Ausführungsbeispiele darstellenden Zeichnung näher erläutert. Es zeigen schematisch:
- Fig. 1 bis Fig. 4: Abschnitte verschiedener Ausführungsbeispiele eines Absorberbauteils A1, A2, A3 und A4 in einer Querschnittdarstellung;
- Fig. 5a und 5b: einen Wärmedämmkörper in Draufsicht und einer Stirnseitenansicht;
- Fig. 6a bis 6c: ein metallisches Flachprodukt mit einer auf dessen Vorderseite aufgebrachten Absorptionsschicht und einem auf der Rückseite aufgeklebten Leitungselement sowie einem Wärmedämmkörper gemäß den Figuren 5a und 5b, in Längsseitenansicht, Draufsicht bzw. Schnittansicht entlang der Schnittlinie VIc-VIc der Fig. 6b;
- Fig. 7: eine Vorrichtung zum Verbinden eines Wärmetauscher-Halbzeuges gemäß Fig. 6a mit einer Basisschicht durch Hinterschäumen, in einer Längsschnittansicht;
- Fig. 8: ein mittels einer Vorrichtung gemäß Fig. 7 hergestelltes Absorberbauteil A5 in einer Längsschnittansicht; und
- Fig. 9: eine Vorrichtung zum kontinuierlichen Verbinden einer Vielzahl von Wärmetauscher-Halbzeugen gemäß Fig. 6a mit einer Basisschicht durch Hinterschäumen.

Die Absorberbauteile weisen auf ihrer der Sonnenstrahlung zugewandten Seite S eine Trägerschicht 1 auf, auf deren der Seite S zugewandten Oberfläche eine Absorptionsschicht 2 aufgetragen ist.

Die Trägerschicht 1 besteht aus einem metallischen Flachprodukt, vorzugsweise aus einem Stahlblech, dessen Oberflächen feuerverzinkt oder in anderer Weise mit einem vor Korrosion schützenden metallischen Überzug 3, 4 beschichtet sind.

Die Absorptionsschicht 2 ist aus einem auf die Trägerschicht 1 aufgebrachten Lack gebildet. Alternativ kann die Absorptionsschicht 2 auch aus einer auf die Trägerschicht 1 aufgebrachten Folie gebildet werden. Der Lack bzw. die Folie enthält unter anderem Farbpigmente, um das jeweilige Absorberbauteil in der jeweils gewünschten Farbe erscheinen zu lassen. Des Weiteren enthält der Lack bzw. die Folie Sonnenstrahlung absorbierende Partikel, so dass er im nahinfraroten Bereich bei einer Wellenlänge von 200 nm bis 3000 nm eine Absorption im Bereich von 30 bis 80%, insbesondere 30 bis 60%, d.h. einen Absorptionskoeffizienten α im Bereich von 0,3 bis 0,8, insbesondere 0,3 bis 0,6 aufweist.

Im sichtbaren Wellenlängenbereich von 300 nm bis 80 nm besitzt die Absorptionsschicht 2 einen Absorptionsgrad (Absorptionskoeffizienten) α im Bereich von 0,6 bis 0,8, wodurch eine gewisse Farbigkeit der Oberfläche ermöglicht ist.

In einer bevorzugten Ausführung besteht die Absorptionsschicht 2 aus einer Polymermatrix, die beispielsweise aus Polyvinyldifluorid, Polyester, Siliconpolyester, Melamin, Polyvinylchlorid oder Polyurethan gebildet ist. In diese Polymermatrix sind ein oder mehrere Zusätze eingebracht. Als Zusätze können beispielsweise Polyamid, Wachse, metallische Partikel, insbesondere Flocken, Russpartikel und/oder weitere die Ästhetik, Verarbeitbarkeit oder Haltbarkeit beeinflussende Additive enthalten sein. Hierdurch lässt sich eine beständige Absorptionsschicht erzielen, deren Eigenschaften, wie Farbe, Wärmeleitfähigkeit, optische Effekte, und andere, durch die Zusätze eingestellt sind.

Auf der von der Absorptionsschicht 2 abgewandten Rückseite R der Trägerschicht 1 sind ein oder mehrere rohr- oder schlauchförmige Leitungselemente 5 stoffschlüssig befestigt, die beispielsweise aus einem Kupfermaterial, Kunststoff oder einem Stahlwerkstoff hergestellt sind. Durch das aus den Leitungselementen bzw. Leitungsabschnitten 5 gebildete Leitungssystem 6 fließt ein wärmetransportierendes Fluid, bei dem es sich beispielsweise um eine Wasser-/Glykol-Mischung handeln kann. Vorzugsweise weist das Leitungssystem 6 mindestens ein rohr- oder schlauchförmiges Leitungselement 5 auf, das mäanderförmig ausgebildet bzw. verlegt wird.

Die stoffschlüssige Verbindung zwischen Trägerschicht 1 und dem mindestens einen Leitungselement 5 wird durch eine Klebschicht 7 gebildet. Die Klebschicht 7 kann durch Auftragen eines fließfähigen Klebers auf die Rückseite der Trägerschicht 1 hergestellt werden. Vorzugsweise wird jedoch als Klebschicht 7 eine beidseitig klebende Folie verwendet, die auf die Rückseite der Trägerschicht 1 aufgebracht wird. Die mit dem Leitungselement 5 zu verklebende Seite der Klebefolie 7 kann dabei zunächst mit einer Schutzfolie abgedeckt sein, die vor dem Aufbringen des Leitungselements 5 entfernt wird. Alternativ oder ergänzend kann die Klebefolie 7 auch derart ausgebildet sein, dass ihre mit dem Leitungselement 5 zu verklebende Seite vor und/oder während der stoffschlüssigen Verbindung durch Wärmeeinwirkung oder chemisch reaktiviert wird.

Um die Haftung der Klebschicht 7 an dem metallischen Flachprodukt zu verbessern, wird auf die Unterseite (Rückseite) der Trägerschicht 1 bzw. der Korrosionsschutzschicht 4 ein Lack aufgebracht, der nucleophile Gruppen oder Zentren enthält. Bei diesen nucleophilen Gruppen bzw. Molekülen handelt es sich beispielsweise um eine oder mehrere der folgenden Gruppen/Moleküle: OH-, NH₂-, SH-, CHO-, COOH-, CN-, NC-, -SCN-, NCS-, SO₄-, SO₃-, NO-, NO₂-, NO₃-Gruppe, =CO (Ketone), Halogenide (-F, -Cl, -Br, -I), -PH₂ (Phosphine) und dergleichen.

Die auf das metallische Flachprodukt, vorzugsweise Stahlflachprodukt, aufgebrachten Beschichtungen weisen vorzugsweise einen mehrschichtigen Aufbau zur Verbesserung der Haftung auf. Dieser mehrschichtige Aufbau kann eine substratabhängige Vorbehandlung, einen Primer und/oder eine Trägerfolie umfassen. Des Weiteren liegt es im Rahmen der vorliegenden Erfindung, die der Sonnenstrahlung zugewandte Seite S mit einer Deckschicht 9 oder einem Klarlack zu überziehen, insbesondere um die Haltbarkeit zu steigern und gegebenenfalls optische Effekte zu erzeugen.

Das Aufbringen von einseitigen Beschichtungen erfolgt bei dem erfindungsgemäßen Verfahren beispielsweise im Curtain-Coating-, Coil-Coating-, Spray- oder Pulverbeschichtungsverfahren.

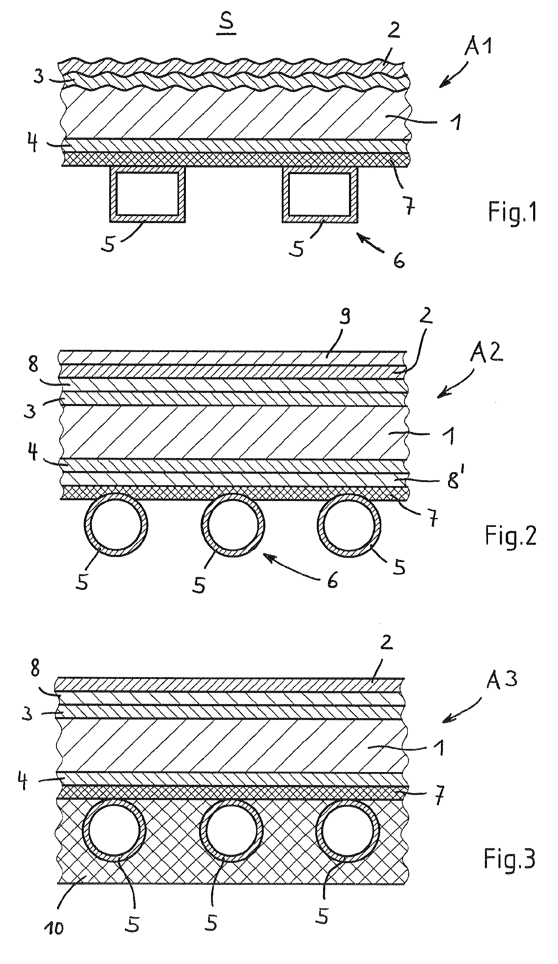

In Fig. 1 besteht die Trägerschicht 1 aus einem Stahlflachprodukt, das beidseitig mit einer Korrosionsschutzschicht 3, 4 beschichtet ist. Auf der der Sonnenstrahlung zugewandten Vorderseite ist die Absorptionsschicht 2 aufgebracht. Die Trägerschicht 1 weist zumindest an seiner Oberseite (Vorderseite) eine dreidimensionale Struktur auf. Dementsprechend weisen auch die obere Korrosionsschutzschicht 3 und die darauf aufgebrachte Absorptionsschicht 2 eine dreidimensionale Struktur auf. Auf der Rückseite R des Stahlflachproduktes 1 sind Leitungselemente (Rohrelemente) 5 angeordnet, die über eine Klebschicht 7 stoffschlüssig mit der unteren Korrosionsschutzschicht 4 des Stahlflachproduktes 1 verbunden sind. Die Leitungselemente 5 weisen ein rechteckiges Querschnittsprofil auf. Durch dieses Querschnittsprofil ergibt sich eine relativ große Kontaktfläche, wodurch die stoffschlüssige Verbindung mit dem Stahlflachprodukt 1 sowie die Wärmeübertragung vom Stahlflachprodukt 1 zu dem in den Leitungselementen 5 strömenden Fluid verbessert werden. Zwischen der unteren Korrosionsschutzschicht 4 des Stahlflachproduktes und der Klebschicht 7, die vorzugsweise aus einer beidseitig klebenden Folie gebildet ist, ist eine Haftvermittlerschicht (nicht gezeigt) angeordnet.

In dem in Fig. 2 dargestellten Ausführungsbeispiel ist das metallische Flachprodukt 1 wiederum beidseitig mit Korrosionsschutzschichten 3, 4 beschichtet. Auf der Vorderseite sowie auf der Rückseite des metallischen Flachprodukts 1 sind mehrschichtige Schichtaufbauten aufgebracht, bei denen jeweils eine Zwischenschicht 8, 8' vorgesehen ist, die mittels eines Haftvermittlers (Primers) die Verbindung zwischen Korrosionsschutzschicht 3 und Absorptionsschicht 2 bzw. Korrosionsschutzschicht 4 und Klebschicht (Klebefolie) 7 verbessern. Des Weiteren ist auf der Oberseite der Absorptionsschicht 2 eine transparente Deckschicht 9 in Form eines Klarlacks oder einer transparenten Folie stoffschlüssig aufgebracht. Auf der Rückseite (Unterseite) der Klebschicht 7 sind rohrförmige Leitungselemente 5 vorgesehen, wobei die Dicke der plastisch formbaren Klebschicht 7 derart bemessen ist, dass die Leitungselemente 5 teilweise in der Klebschicht 7 eingebettet sind.

Das in Fig. 3 dargestellte Absorberbauteil A3 umfasst ebenfalls ein beidseitig mit Korrosionsschutzschichten 3, 4 beschichtetes metallisches Flachprodukt. Zwischen der Absorptionsschicht 2 und der Korrosionsschutzschicht 3 ist eine Zwischenschicht bzw. Haftvermittlerschicht 8 vorgesehen. Auf der Klebschicht 7, die über eine Haftvermittlerschicht (nicht gezeigt) stoffschlüssig mit der Korrosionsschutzschicht 4 verbunden ist, ist eine Wärmedämmschicht 10 mit darin eingelassenen rohrförmigen Leitungselementen 5 aufgebracht. Die Leitungselemente 5 sind dabei ebenso wie die Wärmedämmschicht 10 stoffschlüssig mit der Klebschicht 7 verbunden. Die Wärmedämmschicht 10 ist beispielsweise aus Mineralwolle oder Hartschaumstoff, vorzugsweise aus PUR- oder PIR-Schaum gebildet.

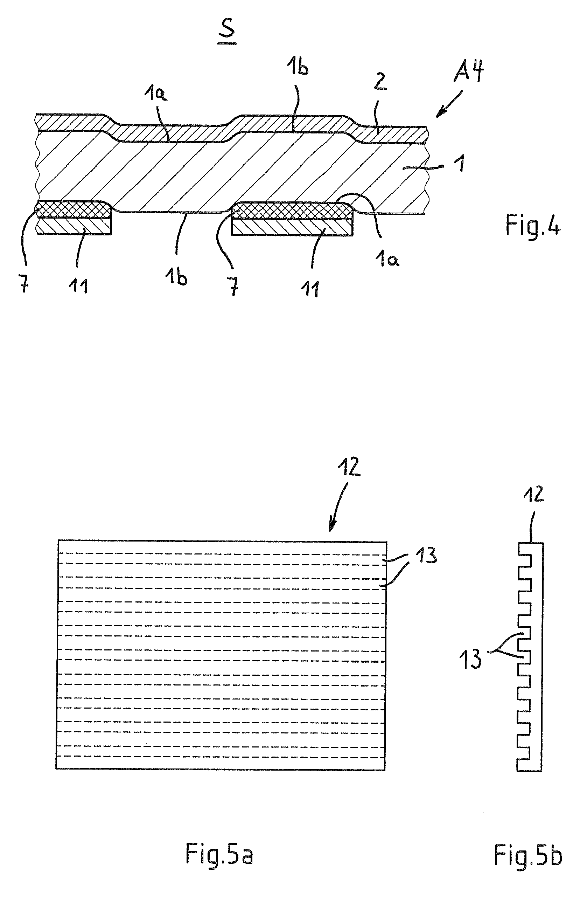

Bei dem in Fig. 4 gezeigten Absorberbauteil A4 weist das metallische Flachprodukt 1, das beispielsweise aus Edelstahl, Aluminiumblech, Kupferblech oder schmelztauchbeschichteten Stahlblech besteht, eine makroskopische Strukturierung in Form von linienartigen Vertiefungen 1a bzw. Erhebungen 1b auf. Auf der Oberseite (Vorderseite) ist das metallische Flachprodukt 1 vollflächig mit der Absorptionsschicht beschichtet. Die Rückseite R des metallischen Flachprodukts 1 ist in diesem Ausführungsbeispiel nur teilweise mit der Klebschicht 7 beschichtet. Die Klebschicht 7 ist vorzugsweise im Bereich der Vertiefungen 1a des Flachprodukts 1 abgeordnet, während die rückseitigen Erhebungen 1b frei von Klebstoff sind. Auf der Klebschicht 7 ist als Abdeckung eine Schutzfolie 11 aufgebracht, die bei der Weiterverarbeitung, insbesondere vor dem Aufbringen von Leitungselementen 5 abgezogen werden kann. Durch die dreidimensionale Struktur des metallischen Flachprodukts 1 ergibt sich eine Versteifung des Absorberbauteils A4. Insbesondere wird durch die dreidimensionale Struktur die Handhabbarkeit des in Fig. 4 skizzierten Halbzeuges verbessert.

Um das Rohr- oder Schlauchelement 5 in Fassaden- oder Dachpaneelen mit dem Rohroder Schlauchelement eines anderen entsprechenden Paneels oder mit der innen liegenden Deckseite verbinden zu können, wird das Rohr- oder Schlauchelement 5 mit Anschlussstücken (nicht gezeigt) versehen. Vorzugsweise sind diese Anschlussstücke mit genormten Verbindungsmitteln, wie z.B. Muffen oder Schraubgewinden, ausgestattet.

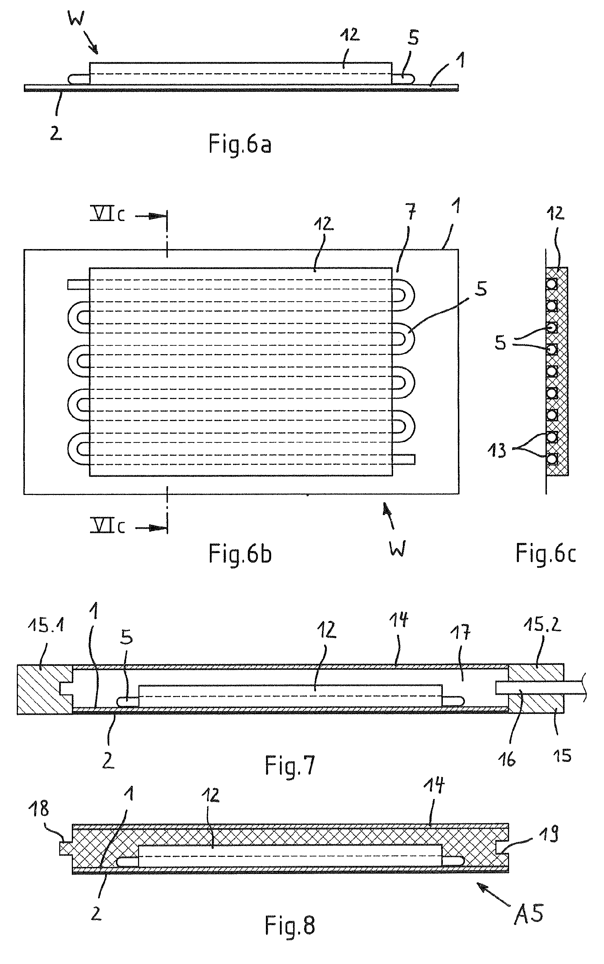

Mit Bezug auf die Fig. 5a bis Fig. 7 wird nun die Herstellung eines in Fig. 8 dargestellten Absorberbauteils A5 beschrieben. Zur Herstellung des Absorberbauteils A5 werden ein plattenförmiger Wärmedämmkörper 12, ein mäanderförmig formbares Rohr- oder Schlauchelement 5 und ein erfindungsgemäß beschichtetes metallisches Flachprodukt 1 bereitgestellt bzw. hergestellt. Der plattenförmige Wärmedämmkörper 12 ist beispielsweise aus PUR- oder PIR-Schaum oder Mineralwolle gefertigt. In einer der Flachseiten des Wärmedämmkörpers 12 ist eine Vielzahl von Nuten 13 ausgespart oder ausgebildet, in die das Rohr- oder Schlauchelement 5 mäanderförmig eingelegt wird (vgl. Figuren 5a, 5b, 6a, 6b und 6c). Die Nuten 13 verlaufen vorzugsweise im Wesentlichen parallel zueinander und durchgehend bis zu den Stirnkanten des Wärmedämmkörpers 12.

Der mit dem mäanderförmigen Rohr- oder Schlauchelement 5 versehene Wärmedämmkörper 12 wird auf die Rückseite des mit der beidseitig klebenden Klebefolie 7 versehenen Metallblechs 1 aufgebracht, so dass das Rohr- oder Schlauchelement 5 und der Wärmedämmkörper sodann über die Klebefolie 7 stoffschlüssig mit dem Metallblech 1 verbunden sind. Auf der Vorderseite weist das Metallblech 1 die oben erwähnte Absorptionsschicht 2 auf. Es liegt damit ein Wärmetauscher-Halbzeug W zur Herstellung eines Absorberbauteils als Fassaden- oder Dachpaneel vor (siehe insbesondere Fig. 6a).

Das Wärmetauscher-Halbzeug W gemäß Fig. 6a wird anschließend rückseitig mit einer Basisschicht (Innenschale) 14, vorzugsweise einem metallischen Flachprodukt, zum Beispiel Stahlflachprodukt versehen, wobei die Verbindung durch Hinterschäumen hergestellt wird. Hierzu werden das Wärmetauscher-Halbzeug W und die Basisschicht 14 beabstandet zueinander in ein Spritzgießwerkzeug 15 eingelegt. Der gewünschte Abstand zwischen dem Wärmetauscher-Halbzeug W und der Basisschicht 14 kann beispielsweise durch Abstandshalter (nicht gezeigt) sichergestellt werden. Das Wärmetauscher-Halbzeug W und die Basisschicht 14 werden in dem Spritzgießwerkzeug 15 lagefixiert. Sodann wird über eine Zufuhröffnung 16 flüssiges Schaummaterial in den durch das Wärmetauscher-Halbzeug W und die Basisschicht 14 begrenzten Hohlraum 17 eingespritzt. Das Schaummaterial expandiert in dem Hohlraum 17 und härtet dort aus. Vorzugsweise ist das Spritzgießwerkzeug mit Formstücken 15.1, 15.2 ausgestattet, die der Bildung von Formschlusselementen 18, 19 an gegenüberliegenden Kanten des ausgehärteten Schaumkörpers 20 dienen (vgl. Fig. 8).

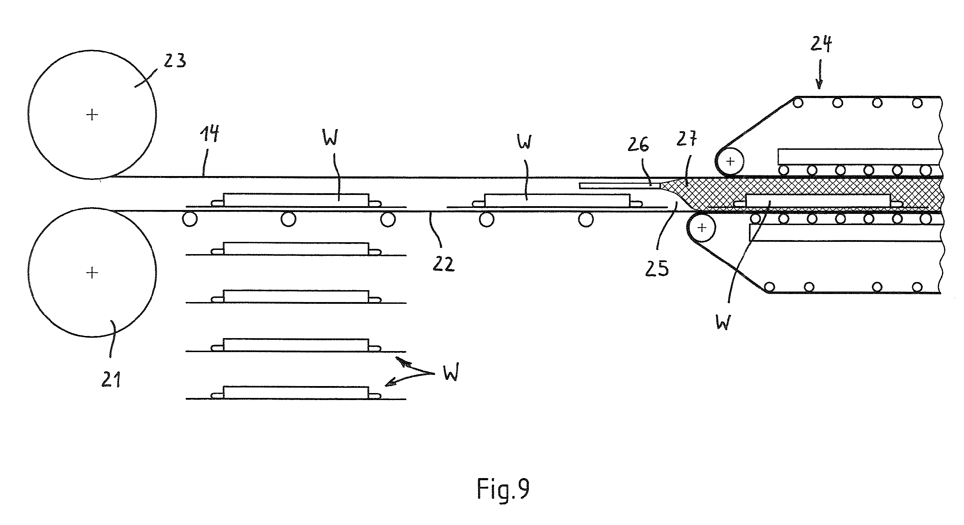

Anstelle einer diskontinuierlichen Fertigung mittels eines Spritzgießwerkzeugs 15 gemäß Fig. 7 kann die Anbringung einer rückseitigen Basisschicht 14 an Wärmetauscher-Halbzeugen W gemäß Fig. 6a auch in einem kontinuierlichen oder quasi-kontinuierlichen Prozess erfolgen. Letzteres ist in Fig. 9 beispielhaft skizziert. Fig. 9 zeigt eine Anlage mit einer Vorrichtung zum Abwickeln eines Papier- und Kunststofffolienwickels 21. Auf die abgewickelte Papier- oder Kunststofffolienbahn 22 werden die weiterzuverarbeitenden Wärmetauscher-Halbzeugen W nacheinander in mindestens einer Reihe aufgelegt. Die Papier- oder Kunststofffolienbahn 22 dient als Schutz für die Absorptionsschicht 2 des jeweiligen Wärmetauscher-Halbzeugs W. Des Weiteren umfasst die in Fig. 9 skizzierte Anlage eine Vorrichtung zum Abwickeln eines Basisschichtwickels 23. Bei der aufgewickelten Basisschicht 14 handelt es sich beispielsweise um ein zu einem Coil aufgewickeltes Stahlfeinblech. Die abgewickelte Papier- oder Kunststofffolienbahn 22 mit den darauf in Reihe aufgelegten Wärmetauscher-Halbzeugen W und die abgewickelte Basisschicht 14 werden parallel und beabstandet zueinander einer Doppelbandpresse 24 zugeführt. In den durch die Papier- oder Kunststofffolienbahn 22 und die Basisschicht 14 begrenzten Zwischenraum 25 wird mittels einer Zufuhrleitung 26 expandierendes Schaummaterial 27 eingebracht. Die abschließende Expansion und Aushärtung des Schaummaterials 27 erfolgt innerhalb der Doppelbandpresse 24. Der sich auf diese Weise ergebende Verbundmaterialstrang wird in Förderrichtung hinter der Doppelbandpresse 24 in Stücke mit vorgegebener Länge geschnitten, wobei der Schnitt jeweils zwischen den aufeinanderfolgenden, hinterschäumten Wärmetauscher-Halbzeugen W erfolgt.

Das Rohr- oder Schlauchelement 5 des Wärmetauscher-Halbzeugs W gemäß Fig. 6a kann dabei bereits mit den oben erwähnten Anschlussstücken (nicht gezeigt) versehen sein bzw. werden. Geeignete Anschlussstücke können allerdings auch noch zu einem späteren Zeitpunkt an dem Rohr- oder Schlauchelement 5 montiert werden.

Die Ausführung der vorliegenden Erfindung ist nicht auf die in der Zeichnung dargestellten Ausführungsbeispiele beschränkt. Vielmehr sind zahlreiche Varianten denkbar, die auch bei einer von den gezeigten Ausführungsbeispielen abweichenden Gestaltung von der in den beiliegenden Ansprüchen angegebenen Erfindung Gebrauch machen.

## Patentansprüche

1. Verfahren zur Herstellung eines Absorberbauteils (A1, A2, A3, A4, A5) für thermosolare Anwendungen, **gekennzeichnet durch** die Arbeitsschritte:
Bereitstellen eines metallischen Flachproduktes (1), vorzugsweise Flachstahlproduktes;
- Aufbringen einer Absorptionsschicht (2) auf die Oberseite des Flachproduktes, wobei die aufgebrachte Absorptionsschicht (2) zumindest partiell im Wellenlängenbereich kleiner/gleich 3000 nm einen solaren Absorptionskoeffizienten im Bereich von 0,3 bis 0,8 aufweist;
- Aufbringen eines Haftvermittlers (8') auf die Unterseite des Flachproduktes (1);
- Aufbringen einer Klebschicht (7) auf den Haftvermittler (8') oder einer den Haftvermittler (8') enthaltenden Klebschicht (7) auf die Unterseite des Flachproduktes (1); und
- Aufbringen mindestens eines Leitungselements (5) auf die Klebschicht (7), wobei das Leitungselement (5) dazu vorgesehen ist, von einem Wärmeträgerfluid durchströmt zu werden.

2. Verfahren nach Anspruch 1, **dadurch gekennzeichnet, dass** die aufgebrachte Absorptionsschicht (2) zumindest partiell im Wellenlängenbereich größer 3000 nm einen solaren Emissionsgrad im Bereich von 0,3 bis 1,0 aufweist.

3. Verfahren nach Anspruch 1 oder 2, **dadurch gekennzeichnet, dass** als Klebschicht (7) eine Klebefolie verwendet wird.

4. Verfahren nach einem der Ansprüche 1 bis 3, **dadurch gekennzeichnet, dass** die Klebschicht (7) derart ausgebildet wird, dass sie die Unterseite des Flachproduktes (1) partiell bedeckt.

5. Verfahren nach einem der Ansprüche 1 bis 4, **dadurch gekennzeichnet, dass** zur Herstellung der Klebschicht (7) ein Klebstoff oder eine Klebefolie verwendet wird, der/die Partikel enthält, die bei einer Temperatur von 0°C eine Wärmeleitfähigkeit von mindestens 20 W/mK, vorzugsweise von mindestens 50 W/mK aufweisen.

6. Verfahren nach einem der Ansprüche 1 bis 5, **dadurch gekennzeichnet, dass** der Haftvermittler (8') und/oder die Klebschicht (7) nucleophile Gruppen oder Zentren enthält.

7. Verfahren nach einem der Ansprüche 1 bis 6, **dadurch gekennzeichnet, dass** als Flachprodukt (1) ein Stahlflachprodukt verwendet wird, das zumindest an seiner Oberseite eine dreidimensionale Struktur (1a, 1b) aufweist, wobei die dreidimensionale Struktur stochastisch und/oder deterministisch verteilte Strukturelemente (1a, 1b) aufweist.

8. Verfahren nach einem der Ansprüche 1 bis 7, **dadurch gekennzeichnet, dass** die Absorptionsschicht (2) derart ausgebildet wird, dass sie eine dreidimensionale Struktur aufweist.

9. Verfahren nach einem der Ansprüche 1 bis 8, **dadurch gekennzeichnet, dass** die Absorptionsschicht (2) derart ausgebildet wird, dass sie Flächenbereiche mit unterschiedlichem Absorptionskoeffizienten aufweist.

10. Verfahren nach einem der Ansprüche 1 bis 9, **dadurch gekennzeichnet, dass** die Absorptionsschicht (2) mit einer transparenten Decklackschicht (9) oder transparenten Deckfolie beschichtet wird.

11. Verfahren nach einem der Ansprüche 1 bis 10, **dadurch gekennzeichnet, dass** das mindestens eine Leitungselement (5) vor dem Aufbringen auf die Klebschicht (7) in einem mindestens eine Nut (13) aufweisenden Wärmedämmkörper (12) eingelegt wird, wobei das in die Nut (13) eingelegte Leitungselement (5) flächenbündig mit dem Wärmedämmkörper (12) abschließt oder gegenüber dem Wärmedämmkörper (12) vorsteht.

12. Verfahren nach einem der Ansprüche 1 bis 11, **dadurch gekennzeichnet, dass** das Leitungselement (5) oder der Wärmedämmkörper (12) rückseitig mit einer Basisschicht (14) beschichtet wird, wobei die Verbindung mit der Basisschicht (14) durch Hinterschäumen des mit Abstand zur Basisschicht (14) angeordneten Leitungselements (5)/Wärmedämmkörpers (12) erzeugt wird.

13. Verfahren nach Anspruch 12, **dadurch gekennzeichnet, dass** die Absorberbauteile aneinandergereiht in einem kontinuierlichen oder quasikontinuierlichen Prozess mit der Basisschicht (14) beschichtet werden, wobei die Verbindung mit der Basisschicht (14) durch Hinterschäumen erzeugt wird.

14. Verfahren nach Anspruch 12 oder 13, **dadurch gekennzeichnet, dass** während der Verbindung der Basisschicht (14) mit dem Leitungselement (5)/Wärmedämmkörper (12) zueinander kompatible Formschlusselemente (18, 19) an gegenüberliegenden Kanten des Absorberbauteils (A5) ausgebildet werden.

15. Absorberbauteil (A1, A2, A3, A4, A5) für thermosolare Anwendungen, **gekennzeichnet durch** ein metallisches Flachprodukt (1), vorzugsweise Flachstahlprodukt mit einer Oberseite und einer Unterseite, wobei auf die Oberseite des Flachproduktes (1) eine Absorptionsschicht (2) aufgebracht ist, die zumindest partiell im Wellenlängenbereich kleiner/gleich 3000 nm einen solaren Absorptionskoeffizienten im Bereich von 0,3 bis 0,8 aufweist, wobei auf die Unterseite des Flachproduktes (1) entweder ein Haftvermittler (8') und darauf eine Klebschicht (7) oder eine einen Haftvermittler (8') enthaltende Klebschicht (7) aufgebracht ist, und wobei auf die Klebschicht (7) mindestens ein Leitungselement (5) aufgebracht ist, welches dazu vorgesehen ist, von einem Wärmeträgerfluid durchströmt zu werden.
